# EUROPÄISCHE PATENTANMELDUNG

(11) **EP 2 174 893 A2**
(43) Veröffentlichungstag der Anmeldung: **14.04.2010**
(21) Anmeldenummer: 09003067.7
(22) Anmeldetag: 04.03.2009
(51) Int. Cl.: B65G 1/10, E05B 65/46

(54) **Industrieregal mit Auszugsperre**

(30) Priorität: 07.10.2008 DE 202008013177 U
(71) Anmelder: Karl H. Bartels GmbH, 25358 Horst (DE)
(72) Erfinder: Bartels, Martin, 25348 Engelbrechtsche Wildnis (DE)
(74) Vertreter: Aulich, Martin

(57) **Zusammenfassung**

Die Erfindung betrifft ein Industrieregal, insbesondere Schwerlastregal, mit mehreren übereinander angeordneten Auszügen (14), insbesondere Schubfächern, sowie einer Auszugsperre (30), durch die beim Hervorziehen eines Auszugs (14) die anderen Auszüge (14) des Regals blockiert und an dem Hervorziehen gehindert sind, wobei die Auszugsperre (30) den Auszügen (14) jeweils zugeordnete, durch ein drehbar gelagertes Verbindungsteil (32) miteinander verbundene Sperranschläge (40a) umfasst, wobei den Auszügen (14) jeweils ein Stellmittel (36) zugeordnet ist, das beim Hervorziehen eines ersten Auszugs (14) aus dem Regal (10) mit dem drehbar gelagerten Verbindungsteil (32) derart zusammenwirkt, dass sämtliche den weiteren Auszügen (14) zugeordneten Sperranschläge (40a) durch Rotation des diese verbindenden Verbindungsteils (32) jeweils aus einer Freistellung in eine die weiteren Auszüge (14) blockierende Stellung überführt werden.

## Beschreibung

Die vorliegende Erfindung betrifft ein Industrieregal, insbesondere ein Schwerlastregal, mit mehreren übereinander angeordneten Auszügen, insbesondere Schubfächern, sowie mit einer Auszugsperre, durch die beim Hervorziehen eines Auszugs die anderen Auszüge des Regals blockiert und an dem Hervorziehen gehindert sind.

Derartige Auszugsperren sind für Industrieregale aus Sicherheitsgründen berufsgenossenschaftlich vorgeschrieben. Sie verhindern, dass gleichzeitig mehrere Auszüge eines Industrieregals hervorgezogen werden können. Bei schweren Lasten, die auf den jeweiligen Auszügen gelagert werden sollen, würde andernfalls die Gefahr bestehen, dass das Industrieregal nach vorne kippt.

Bei den im Stande der Technik bekannten Auszugsperren ist in der Regel problematisch, dass diese individuell auf die jeweiligen vertikalen Auszugabstände abgestimmt sind. Mit anderen Worten ist es nicht oder nur mit erheblichem Aufwand möglich, die Höhenpositionen der einzelnen Auszüge im Regal zu verändern und dabei gleichzeitig die Auszugsperre unverändert beizubehalten.

Ausgehend hiervon ist es daher insbesondere Aufgabe der vorliegenden Erfindung, ein Industrieregal anzugeben mit einer Auszugsperre, die eine möglichst individuelle Höhenpositionierung der einzelnen Auszüge im Regal erlaubt, ohne dass die Auszugsperre angepasst werden muss.

Diese Aufgabe wird gelöst durch ein Industrieregal der eingangs genannten Art, das die Merkmale des Anspruches 1 aufweist.

Danach umfasst das Industrieregal eine Auszugsperre, die den Auszügen jeweils zugeordnete, durch ein drehbar gelagertes Verbindungsteil miteinander verbundene Sperranschläge aufweist. Den einzelnen Auszügen ist darüber hinaus jeweils ein Stellmittel zugeordnet. Beim Hervorziehen eines ersten Auszugs aus dem Regal wirkt das diesem zugeordnete Stellmittel mit dem drehbar gelagerten Verbindungsteil derart zusammen, dass die Auszugsperre bzw. sämtliche den weiteren Auszügen zugeordnete Sperranschläge durch Rotation des diese verbindenden Verbindungsteils jeweils aus einer Freistellung in eine die weiteren Auszüge blockierende Stellung überführt werden.

Wenn sämtliche Auszüge eingeschoben sind, d.h. wenn sie in der Grundstellung im Inneren des Regals angeordnet sind, befinden sich sämtliche Sperranschläge in der Regel in der das Hervorziehen eines Auszugs ermöglichenden Freistellung. Wenn dann ein Bediener einen ausgewählten ersten Auszug aus der Grundstellung nach vorne zieht, löst diese Bewegung - über das Stellmittel - die Rotation des Verbindungsteils aus. Die mit dem Verbindungsteil verbundenen Sperranschläge werden dadurch in die blockierende Stellung überführt.

In der blockierenden Stellung der Auszugsperre bzw. der Sperranschläge wird ein Hervorzuziehen der weiteren Auszüge unterbunden. Der jeweilige weitere Auszug bzw. ein mit diesem Auszug wirkverbundenes Bauteil stößt bei einer entsprechenden Ausziehbewegung gegen den dem jeweiligen Auszug zugeordneten Sperranschlag, wodurch dessen weitere Ausziehbewegung blockiert wird. Wenn schließlich der hervorgezogene Auszug später wieder in die Grundstellung zurückgeschoben wird, werden die Sperranschläge durch das entsprechende Stellmittel jeweils wieder in die Freistellung rücküberführt.

Bevorzugt tritt beim Hervorziehen des jeweils ersten Auszugs das Stellmittel, insbesondere ein verliersicher mit dem Auszug verbundener Zapfen, mit dem Verbindungsteil in berührenden Kontakt und rotiert durch diesen Kontakt das Verbindungsteil und somit die mit diesem verbundenen Sperranschläge in die die weiteren Auszüge blockierende Stellung.

Was das Verbindungsteil betrifft, so verläuft es im Wesentlichen vertikal von unten nach oben entlang der Auszüge.

Die Auszüge sind bevorzugt Fachböden, die in entsprechende Schubfächer des Regals eingeschoben bzw. aus diesen herausgezogen werden können. Die Erfindung ist aber auch anwendbar bei Schubladen oder verschiedenen anderen Arten von hervorziehbaren Auszügen.

In weiterer Ausbildung der Erfindung ist vorgesehen, dass das Verbindungsteil und somit die Sperranschläge vor dem Hervorziehen des ersten Auszugs mittels einer Spannvorrichtung in die sämtliche Auszüge nicht blockierende Freistellung vorgespannt ist bzw. sind. Vorzugsweise zusätzlich aber auch alternativ kann vorgesehen sein, dass das Verbindungsteil bzw. die Sperranschläge mittels der Spannvorrichtung anschließend, d.h. nach dem Hervorziehen des ersten Auszugs, in die die weiteren Auszüge blockierende Stellung vorgespannt wird/werden.

Bevorzugt weist die Spannvorrichtung zu diesen Zwecken eine Feder auf, die einerseits an dem Verbindungsteil exzentrisch zur Drehachse desselben befestigt ist und andererseits an einem anderen, ortsfesten Bauteil des Regals, etwa an dem Grundgestell.

Das Regal weist zweckmäßigerweise mindestens einen Endanschlag auf, gegen den das Verbindungsteil bzw. ein mit diesem drehfest verbundenes Bauteil, insbesondere ein Zapfen, rotierbar ist zur Begrenzung der Rotationsbewegung des Verbindungsteils in die blockierende Stellung und/oder zur Begrenzung der Rotationsbewegung des Verbindungsteils in die Freistellung.

Gemäß einer besonders bevorzugten Ausführungsform der Erfindung ist das Verbindungsteil ein sich vertikal entlang der Auszüge von oben nach unten erstreckendes U-Profil.

Dabei können in der blockierenden Stellung der Sperranschläge die freien Enden der Seitenwände des U-Profils wenigstens annähernd in Richtung des Stellmittels zeigen, nämlich in Richtung des vorzugsweise im hinteren Bereich des Auszugs an diesem befestigten Zapfens. In der Freistellung dagegen sind die freien Enden der Seitenwände des U-Profils bevorzugt von dem Stellmittel bzw. dem Zapfen weggerichtet.

Eine der Seitenwände des U-Profils, genauer gesagt Teilbereiche derselben, fungieren bei dieser Ausführungsform der Erfindung zweckmäßigerweise unmittelbar als Sperranschläge. Dabei wird erfindungsgemäß das Hervorziehen des jeweiligen weiteren Auszugs dadurch unterbunden, dass das jeweilige Stellmittel, nämlich der Zapfen, in der blockierenden Stellung der Auszugsperre bei einer Hervorziehbewegung an dem als jeweils als Sperranschlag fungierenden Teilbereich der Seitenwand anschlägt und so an einer Weiterbewegung gehindert wird.

Das U-Profil nimmt bei der obigen Ausführungsform eine besonders zentrale Stellung ein: Wenn ausgehend von der Grundstellung ein erster Auszug des Regals hervorgezogen wird, tritt der Auszugszapfen mit einer Seitenwand des U-Profils in Kontakt und rotiert das U-Profil von der Freistellung in die blockierende Stellung. In dieser blockierenden Stellung ist das Hervorziehen sämtlicher weiterer Auszüge unterbunden, da die an den weiteren Auszügen angeordneten Zapfen bei etwaigen Versuchen, diese ebenfalls hervorzuziehen, an die in der blockierenden Stellung jeweils als Sperranschlag fungierenden Teilbereiche der Seitenwand des U-Profils anschlagen.

Dadurch, dass die Seitenwand bzw. Teilbereiche derselben als Sperranschläge fungieren, wird erreicht, dass die einzelnen Auszüge innerhalb des Regals in verschiedenen Höhenpositionen installiert werden können, ohne dass die Auszugsperre verändert werden müsste. Denn wenn beispielsweise ein Auszug im Rahmen eines Regalumbaus innerhalb des Regals weiter oben installiert wird, als dies ursprünglich der Fall war, schlägt der entsprechende Zapfen des weiter oben installierten Auszugs nach dem Umbau automatisch weiter oben an der entsprechenden Seitenwand des sich vertikal von oben nach unten erstreckenden U-Profils an.

Das Stellmittel, in diesem Fall der an dem jeweiligen Auszug angeordnete Zapfen, hat demnach eine Doppelfunktion: Zum einen bewirkt er die Drehung des Verbindungsteils und somit die Überführung der Sperranschläge in die blockierende Stellung bzw. später die Rücküberführung in die Freistellung. Zum anderen wirkt er in der blockierenden Stellung in der beschriebenen Weise mit der U-Profil-Seitenwand bzw. dem Sperranschlag zusammen, um die Ausziehbewegung der weiteren Auszüge zu unterbinden.

In weiterer Ausbildung der Erfindung kann an beiden Außenseiten der Seitenwände des U-Profils jeweils mindestens ein insbesondere horizontal verlaufender Zapfen angeordnet sein. Diese Zapfen sind zur Begrenzung der Rotationsbewegung des U-Profils in die blockierende Stellung und/oder zur Begrenzung der Rotationsbewegung des U-Profils in die Freistellung vorgesehen, indem diese entsprechend an dem mindestens einen Endanschlag des Regals anschlagen.

Weitere Ausführungsformen der Erfindung ergeben sich aus den beigefügten Unteransprüchen, der nachfolgenden Beschreibung eines bevorzugten Ausführungsbeispieles sowie aus den beigefügten Zeichnungen.

### Darin zeigen:

- Fig. 1: ein erfindungsgemäßes Schwerlastregal mit Auszugsperre in Seitenansicht,
- Fig. 2: eine vergrößerte Darstellung einer Einzelheit aus Fig. 1 im Horizontalschnitt, insbesondere ein Verbindungsteil der Auszugsperre in Freistellung,
- Fig. 3: das Verbindungsteil aus Fig. 2 in einer gegenüber der Fig. 2 veränderten Stellung,
- Fig. 4: das Verbindungsteil aus Fig. 2 in einer nochmals veränderten Stellung, und
- Fig. 5: das Verbindungsteil aus Fig. 2 in einer nochmals veränderten Stellung.

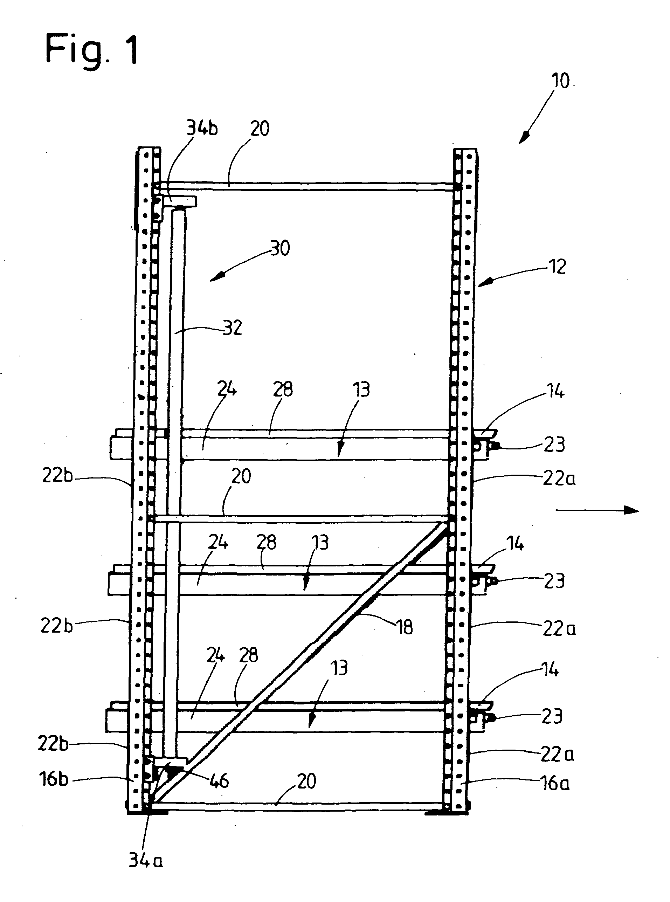

Fig. 1 zeigt ein Schwerlastregal 10. Dieses weist ein an sich bekanntes Ständerwerk 12 auf, in dem von unten nach oben drei übereinander angeordnete Auszugeinrichtungen 13 mit hervorziehbaren Auszügen 14 gelagert bzw. befestigt sind.

Das Ständerwerk 12 verfügt über vier im Grundriss an Ecken eines gedachten Rechtecks bzw. Quadrats angeordnete, vertikal verlaufende Profilständer 16a, 16b, 16c, 16d, nämlich Lochprofilständer. Von diesen Lochprofilständern 16a...16d sind in der dargestellten Seitenansicht des Regals nur zwei zu erkennen sind, nämlich von vorne betrachtet der vordere linke Ständer 16a sowie der hintere Ständer 16b.

Die Ständer 16a, 16b sind untereinander durch eine schrägverlaufende Verstrebung 18 sowie drei horizontal verlaufende Querverstrebungen 20 verbunden, so dass sich insgesamt eine rahmenartige Struktur ergibt. In gleicher Weise sind die nicht dargestellten, von vorne betrachtet rechten Lochprofilständer 16c, 16d untereinander verbunden.

Zur Bildung des Ständerwerkes 12 mit insgesamt quaderförmiger Struktur sind die jeweils vorderen Lochprofilständer 16a, 16c einerseits sowie die hinteren Lochprofilständer 16b, 16d andererseits untereinander durch Traversen 22a bzw. 22b verbunden. Diese Traversen 22a, 22b sind auf geeigneter Höhe mittels geeigneter Vorsprünge - Agraffen - in die Löcher der Lochprofilständer 16a...16d eingesteckt und mit den Ständern 16a...16d verschraubt. Sie verlaufen horizontal von den linken Lochprofilständern 16a, 16b zu den rechten Lochprofilständern 16c, 16d.

Die Traversen 22a, 22b dienen als Teil der Auszugeinrichtungen 13 zur Lagerung von seitlichen, in der Breite der Auszüge 14 voneinander parallel beabstandeter Auszugführungen 24, die beidseitig die bewegbaren Auszüge 14 während der nach vorne gerichteten Hervorziehbewegungen sowie während der entsprechenden Rückbewegungen führen. Die Auszugführungen 24 laufen bezogen auf die Regaltiefe von vorne nach hinten horizontal und liegen jeweils einerseits auf den hinteren Traversen 22b auf sowie andererseits auf den vorderen Traversen 22a bzw. sind dort befestigt.

In an sich ebenfalls bekannter Weise sind an den vorderen Enden der Auszugführungen 24 jeweils ortsfest (nicht dargestellt) drehbare Rollen angeordnet, auf denen die Auszüge 14 aufliegen. Im hinteren Bereich werden die Auszüge 14 gegebenenfalls mittels weiteren Rollen oder Kugeln an den Auszugführungen 24 geführt.

Die Auszüge 14 können daher grundsätzlich in der in Fig. 1 dargestellten Pfeilrichtung mittels Handgriffen 23 nach vorne aus dem Regal hervorgezogen werden, um darauf zu lagerndes Lagergut aufzulegen. Bei der Hervorziehbewegung rollt zum einen der Auszug 14 auf den ortsfesten Rollen der Auszugführungen 24 ab, zum anderen werden die Auszüge 14 durch die zwischen den Auszugführungen 24 und den Auszügen 14 angeordneten Kugeln geführt.

Die einzelnen Auszugeinrichtungen 13 können im Raster der Lochprofilständer 16a...16d höhenverstellt werden. Dazu werden die entsprechenden Traversen 22a, 22b der in der Höhe anzupassenden Auszugeinrichtung 13 in einfacher Weise in einer anderen Höhenposition an den Lochprofilständern 16a...16d befestigt.

Die Auszüge 14 sind vorliegend als Schubfächer mit einem Bodenblech 26 sowie seitlichen Wandungen 28 ausgebildet.

Besonders wichtig ist erfindungsgemäß, dass das Regal 10 eine zentral wirkende Auszugsperre 30 aufweist.

Diese ist derart ausgebildet, dass nach dem Hervorziehen eines ersten Auszugs 14 die weiteren Auszüge 14, die sich noch in dem eingeschobenen Zustand befinden, nicht hervorgezogen werden können. Das Hervorziehen dieser weiteren Auszüge 14 ist dann durch die Auszugsperre 30 blockiert. Zu diesem Zweck weist die Auszugsperre 30 ein drehbar gelagertes, seitlich neben den Auszügen 14 von unten nach oben entlang der Auszüge 14 verlaufendes, U-förmiges Profil 32 auf. Das U-förmige Profil 32 ist drehbar gelagert, so dass Rotationen um seine Längsachse möglich sind. Die dafür notwendigen Drehlager sind an geeigneten Lagerträgern 34a und 34b angeordnet, die an einem der hinteren Lochprofilträger 16b, 16d befestigt sind, nämlich im vorliegenden Fall an dem linken hinteren Lochprofilträger 16b. Dabei ist der untere Lagerträger 34b unterhalb der untersten Auszugeinrichtung 13 angeordnet, der obere Lagerträger 34a oberhalb der obersten Auszugeinrichtung 13.

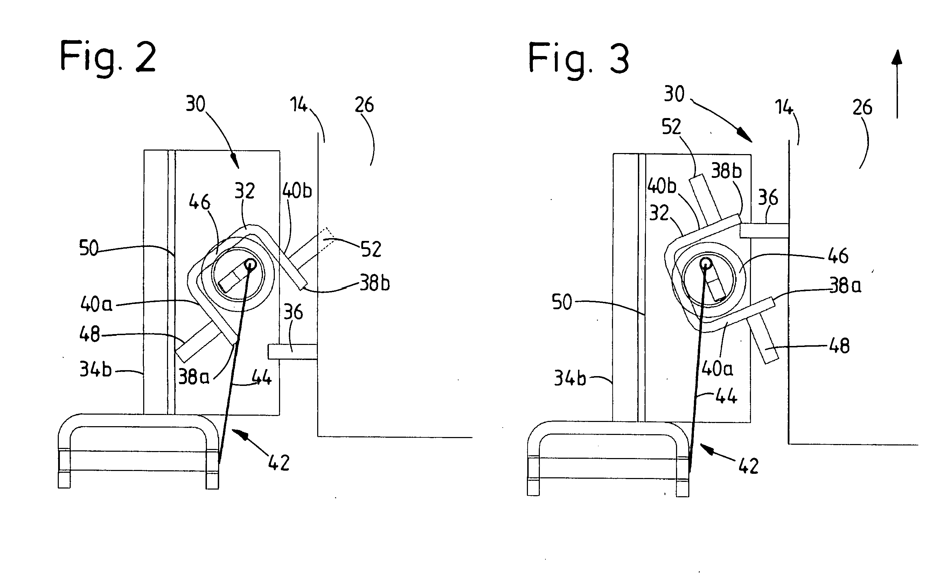

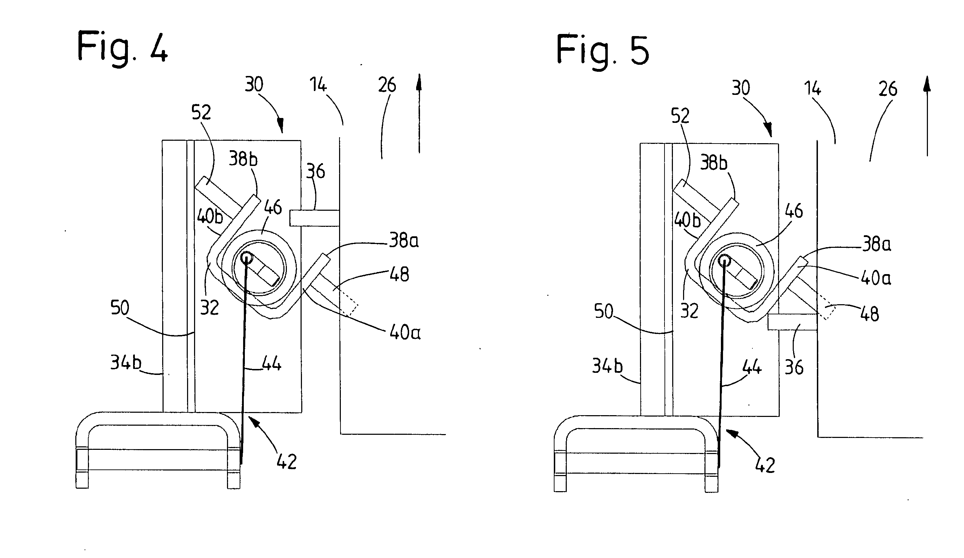

Das drehbare U-Profil 32 ist eines der zentralen Bauteile der Auszugsperre 30. Wie insbesondere in den Fig. 2 - 4 gezeigt, kann das drehbare U-Profil 32 mittels eines im hinteren Bereich jeden Auszugs 14 angeordneten Stellmittels 36, nämlich eines an dem Auszug befestigen bzw. mit diesem verbundenen Zapfens 36, von einer ersten Stellung (Fig. 2) über eine Zwischenstellung (Fig. 3) in eine Endstellung (Fig. 4) rotiert werden.

Die Ausgangsstellung in Fig. 2 entspricht dabei einer Freistellung der Auszugsperre 30, in der sich sämtliche Auszüge 14 im eingeschobenen Zustand (entsprechend Fig. 1) im Inneren des Regals 10 befinden. Das U-Profil 32 ist in dieser Stellung derart ausgerichtet, dass die freien Enden 38a und 38b der Seitenwandungen 40a, 40b des U-Profils 32 wenigstens annähernd in Richtung des Zapfens 36 zeigen.

Das U-Profil 32 ist in diese Stellung mittels einer Spannvorrichtung 42 vorgespannt. Zu diesem Zweck ist eine Feder 44 der Spannvorrichtung 42, nämlich vorzugsweise eine Zug-, aber auch eine Torsionsfeder, unter Vorspannung mit ihrem einen Ende exzentrisch zur Drehachse des U-Profils 32 an diesem bzw. an einem mit dem U-Profil 32 drehstarr verbundenen Lagerzapfen 46 befestigt. Das andere Ende der Feder 44 ist an dem Lagerträger 34b befestigt. Zur Begrenzung der durch die Vorspannung erzeugten Rotationsbewegung des U-Profils 32 ist an dessen Seitenwand 40a außen ein Zapfen 48 angeordnet. Dieser liegt im in der Fig. 2 dargestellten Ausgangsstellung (Freistellung) seitlich an einem Endanschlag 50 des Regals 10 bzw. genauer gesagt des Lagerträgers 34b an.

Fig. 3 zeigt eine Zwischenstellung des U-Profils 32, die durch ein Hervorziehen eines ersten Auszugs 14 in Pfeilrichtung aus der Regalebene nach vorne entstanden ist. Durch das Hervorziehen des ersten Auszugs 14 schlägt der Zapfen 36 dieses Auszugs 14 zunächst an der Innenseite der Seitenwand 40b des U-Profils 32 an. Hierdurch wird das U-Profil 32 entgegen des Uhrzeigersinns um seine Drehachse rotiert. Die Spannvorrichtung 42 schließlich sorgt dafür, dass das U-Profil 32 weiterrotiert wird in eine Endstellung, in der ein außen an der Seitenwand 40b angeordneter Zapfen 52 an dem Endanschlag 50 anschlägt. In dieser Position des U-Profils 32 befindet sich die Auszugsperre 30 in einer Blockadestellung für die anderen Auszüge 14. Der erste Auszug 14 dagegen kann im weiteren Verlauf weiter nach vorne hervorgezogen werden, bis auf nicht näher erläuterte, im Stand der Technik bekannte Weise eine Endposition erreicht ist.

Fig. 5 zeigt nun einen anderen, nicht hervorgezogenen Auszug 14 in der in Fig. 4 gezeigten Stellung des U-Profils 32, d.h. in der Blockadestellung der Auszugsperre 30. Wie zu erkennen ist, ist der andere, nicht hervorgezogene Auszug 14 in dieser Stellung an einer Bewegung nach vorne, d.h. in Pfeilrichtung gehindert. Denn eine Hervorziehbewegung führt dazu, dass dessen Zapfen 36 an der Außenseite der Seitenwandung 40a des U-Profils 32 anschlägt, genauer gesagt an einer Teilfläche bzw. einem Teilbereich der Außenseite der Seitenwandung 40a.

Mit anderen Worten bildet dieser Teilbereich der Außenseite der Seitenwandung 40a einen Sperranschlag für den dargestellten Auszug 14. In gleicher Weise bilden die - weiter oben oder unten an der Seitenwandung angeordneten - Bereiche der Außenseite der Seitenwandung 40a, gegen die die anderen blockierten Auszüge 14 mit ihren jeweiligen Zapfen 36 bei einer Hervorziehbewegung anschlagen bzw. anschlagen würden, Sperranschläge für eben diese dort anschlagenden Auszüge 14. In diesem Sinne ist daher jedem der Auszüge 14 ein durch einen entsprechenden Teilbereich der Seitenwandung 40a gebildeter Sperranschlag zugeordnet. Das U-Profil 32 verbindet daher in diesem Sinne die so definierten Sperranschläge als Verbindungsteil miteinander.

Wenn später der erste hervorgezogene Auszug 14 in die Ausgangsstellung zurückgeschoben wird, wird das U-Profil 32 in dessen in Fig. 2 dargestellte Freistellung zurückbewegt. Dies geschieht, indem der Zapfen 36 des hervorgezogenen Auszugs bei der Rückbewegung den inneren Bereich der Seitenwandung 40a kontaktiert und so das U-Profil 32 im Uhrzeigersinn bewegt. Dadurch wird das U-Profil 32 und damit die Auszugsperre 30 in die Freistellung von Fig. 2 rücküberführt, in der es möglich ist einen weiteren (möglicherweise anderen oder denselben) ersten Auszug 14 hervorzuziehen.

### Bezugszeichenliste:

- 10: Schwerlastregal
- 12: Ständerwerk
- 13: Auszugeinrichtung
- 14: Auszug
- 16a: linker Lochprofilständer
- 16b: linker Lochprofilständer
- 16c: rechter Lochprofilständer
- 16d: rechter Lochprofilständer
- 18: Verstrebung
- 20: Querverstrebung
- 22a: vordere Traverse
- 22b: hintere Traverse
- 23: Handgriff
- 24: Auszugführung
- 26: Bodenblech
- 28: seitliche Wandung
- 30: Auszugsperre
- 32: U-Profil
- 34a: oberer Lagerträger
- 34b: unterer Lagerträger
- 36: Stellmittel
- 38a: freies Ende
- 38b: freies Ende
- 40a: Seitenwandung
- 40b: Seitenwandung
- 42: Spannvorrichtung

- 44: Feder
- 46: Lagerzapfen
- 48: Zapfen
- 50: Endanschlag
- 52: Zapfen

## Patentansprüche

1. Industrieregal, insbesondere Schwerlastregal, mit mehreren übereinander angeordneten Auszügen (14), insbesondere Schubfächern, sowie einer Auszugsperre (30), durch die beim Hervorziehen eines Auszugs (14) die anderen Auszüge (14) des Regals (10) blockiert und an dem Hervorziehen gehindert sind, **dadurch gekennzeichnet, dass** die Auszugsperre (30) den Auszügen (14) jeweils zugeordnete, durch ein drehbar gelagertes Verbindungsteil (32) miteinander verbundene Sperranschläge (40a) umfasst, wobei den Auszügen (14) jeweils ein Stellmittel (36) zugeordnet ist, das beim Hervorziehen eines ersten Auszugs (14) aus dem Regal (10) mit dem drehbar gelagerten Verbindungsteil (32) derart zusammenwirkt, dass sämtliche den weiteren Auszügen (14) zugeordneten Sperranschläge (40a) durch Rotation des diese verbindenden Verbindungsteils (32) jeweils aus einer Freistellung in eine die weiteren Auszüge (14) blockierende Stellung überführt werden.

2. Industrieregal gemäß Anspruch 1, **dadurch gekennzeichnet, dass** beim Hervorziehen des jeweils ersten Auszugs (14) das Stellmittel (36), nämlich ein mit dem Auszug (14) wirkverbundenes Bauteil (36), insbesondere ein verliersicher, vorzugsweise seitlich im hinteren Bereich jeden Auszugs angeordneter Zapfen (36), mit dem Verbindungsteil (32) in berührenden Kontakt tritt und dieses von der Freistellung in die die weiteren Auszüge blockierende Stellung rotiert.

3. Industrieregal gemäß einem oder mehreren der vorhergehenden Ansprüche, **dadurch gekennzeichnet, dass** das Verbindungsteil (32) vor dem Hervorziehen des ersten Auszugs (14) mittels einer Spannvorrichtung (42) in die sämtliche Auszüge (14) nicht blockierende Freistellung vorgespannt ist.

4. Industrieregal gemäß einem oder mehreren der vorhergehenden Ansprüche, **dadurch gekennzeichnet, dass** das Verbindungsteil (32) nach dem Hervorziehen des ersten Auszugs (14) mittels der Spannvorrichtung (42) in die, die weiteren Auszüge (14) blockierende Stellung vorgespannt ist.

5. Industrieregal gemäß einem oder mehreren der vorhergehenden Ansprüche 3 - 4, **dadurch gekennzeichnet, dass** zur Vorspannung des Verbindungsteils (32) in die die weiteren Auszüge (14) blockierende Stellung bzw. in die die Auszüge (14) nicht blockierende Freistellung eine Feder (44) der Spannvorrichtung (42) einerseits an dem Verbindungsteil (32) exzentrisch zur Drehachse desselben und andererseits an einem ortsfesten Bauteil des Regal (10) befestigt ist.

6. Industrieregal gemäß einem oder mehreren der vorhergehenden Ansprüche **dadurch gekennzeichnet, dass** das Regal (10) mindestens einen Endanschlag (50) aufweist, gegen den das Verbindungsteil (32) bzw. ein mit diesem drehfest verbundenes Bauteil (48, 52), insbesondere ein Zapfen, rotierbar ist zur Begrenzung der Rotationsbewegung des Verbindungsteils in die blockierende Stellung und/oder zur Begrenzung der Rotationsbewegung des Verbindungsteils in die Freistellung.

7. Industrieregal gemäß einem oder mehreren der vorhergehenden Ansprüche, **dadurch gekennzeichnet, dass** das Verbindungsteil (32) ein U-Profil ist, wobei in der blockierenden Stellung der Auszugsperre (30) die freien Enden (38a, 38b) der Seitenwände (40a, 40b) des U-Profils (32) wenigstens annähernd in Richtung des Stellmittels (36) zeigen und wobei in der Freistellung der Auszugsperre (30) die freien Enden (38a, 38b) der Seitenwände (40a, 40b) von dem Stellmittel (36) weggerichtet sind.

8. Industrieregal gemäß einem oder mehreren der vorhergehenden Ansprüche, **dadurch gekennzeichnet, dass** das Stellmittel (36), insbesondere der am Auszug (14) angeordnete Zapfen (36), derart ausgebildet und positioniert ist, dass es bei einer Hervorziehbewegung eines blockierten Auszugs (14) an dem diesem Auszug (14) zugeordneten Sperranschlag (40a) anschlägt.

9. Industrieregal gemäß einem oder mehreren der vorhergehenden Ansprüche, **dadurch gekennzeichnet, dass** die den jeweiligen Auszügen (14) zugeordneten Sperranschläge (40a) jeweils Teilbereiche oder Teilabschnitte des Verbindungsteils (32) sind, insbesondere Teilbereiche oder Teilabschnitte einer Seitenwand (40a) des U-Profils (32).

10. lndustrieregal gemäß einem oder mehreren der vorhergehenden Ansprüche, **dadurch gekennzeichnet, dass** an beiden Außenseiten der Seitenwände (40a, 40b) des U-Profils (32) insbesondere horizontal verlaufende Zapfen (48, 52) angeordnet sind, die zur Begrenzung der Rotationsbewegung des U-Profils (32) in die blockierende Stellung und/oder zur Begrenzung der Rotationsbewegung des U-Profils (32) in die Freistellung an dem mindestens einen Endanschlag (50) des Regals (10) anschlagen.
